# EUROPÄISCHE PATENTANMELDUNG

(11) **EP 4 645 116 A1**
(43) Veröffentlichungstag der Anmeldung: **05.11.2025**
(21) Anmeldenummer: 24174053.9
(22) Anmeldetag: 03.05.2024
(51) Int. Cl.: G06F 16/901

(54) **COMPUTERIMPLEMENTIERTES VERFAHREN, DATENSTRUKTUR, VORRICHTUNG ZUM BEREITSTELLEN UND/ODER SPEICHERN EINER ÄNDERUNGSHISTORIE EINES WISSENSGRAPHEN**

(71) Anmelder: Robert Bosch GmbH, 70442 Stuttgart (DE)
(72) Erfinder: Dibowski, Henrik, 75378 Bad Liebenzell (DE)

(57) **Zusammenfassung**

Computerimplementiertes Verfahren, Datenstruktur, Vorrichtung (120) zum Bereitstellen und/oder Speichern einer Änderungshistorie eines ersten Wissensgraphen (102), wobei die Vorrichtung (120) wenigstens einen insbesondere nichtflüchtigen Speicher (112) umfasst, wobei auf dem wenigstens einen Speicher (112) ein zweiter Wissensgraph (104) gespeichert ist, wobei der zweite Wissensgraph (104) zumindest einen Teil des ersten Wissensgraphen (102) umfasst, wobei der zweite Wissensgraph (104) die Änderungshistorie umfasst, wobei die Änderungshistorie wenigstens ein Tripel des ersten Wissensgraphen (102) als Subjekt umfasst, wobei das wenigstens eine Tripel ein Prädikat und ein Objekt umfasst, wobei das Prädikat und das Objekt Tripel des ersten Wissensgraphen (102) mit einem Teilgraphen des zweiten Wissensgraphen (104) verknüpft, der eine Information über die am ersten Wissensgraphen (102) vorgenommene Änderung umfasst.

## Beschreibung

### Stand der Technik

Die Erfindung geht von einem computerimplementierten Verfahren, einer Datenstruktur, und einer Vorrichtung zum Bereitstellen und/oder Speichern einer Änderungshistorie eines Wissensgraphen aus.

Wissensgraphen werden in Datenbanken dazu eingesetzt, Informationen über ein Themengebiet zu speichern. Ein Wissensgraph kann als Antwort auf eine Abfrage die Information bereitstellen, die der Wissensgraph im Zeitpunkt der Abfrage speichert.

Eine Änderungshistorie, die eine Änderung oder Änderungen der im Wissensgraph gespeicherten Information umfasst, kann beispielsweise in einer Ressource Description Framework, RDF, Datenbank für den Wissensgraphen gespeichert werden. Ein Beispiel für eine RDF Datenbank ist Ontotext GraphDB Documentation Release 10.6.2, 26 March 2024, abrufbar unter https://graphdb.ontotext.com/documentation/10.6/pdf/GraphDB.pdf beschrieben.

### Offenbarung der Erfindung

Durch den Gegenstand der unabhängigen Ansprüche kann eine Änderungshistorie nachverfolgt werden.

Beispielsweise umfasst die Änderungshistorie Information, die angibt, wie sich die in einem Wissensgraphen gespeicherte Information im Laufe der Zeit geändert hat.

Beispielsweise umfasst die Änderungshistorie Information, die angibt wer oder was eine Änderung der im Wissensgraphen gespeicherten Information verursacht hat, oder wann oder wie eine Änderung der im Wissensgraphen gespeicherten Information veranlasst wurde.

Durch die Änderungshistorie kann ausgehend von einer Version des Wissensgraphen, die nach einer Änderung der im Wissensgraphen gespeicherten Information vorliegt, eine frühere Version des Wissensgraphen wiederhergestellt werden.

Durch die Änderungshistorie kann aus dem zu einem Zeitpunkt aktuell vorliegenden Wissensgraphen eine Information aus einer Zeit vor dem Zeitpunkt bereitgestellt werden, d.h., eine Antwort, die Information aus der Vergangenheit umfasst.

Aus einem Wissensgraph, der zu einem späteren Zeitpunkt vorliegt, kann eine beliebige Version des Wissensgraphen zu einem früheren Zeitpunkt wiederhergestellt werden. Eine Änderungshistorie einer älteren Version des Wissensgraphs kann ebenfalls ermittelt oder verwendet werden, indem der Zeitpunkt in die Abfrage der Änderungshistorie einbezogen wird, so dass nur die Änderungen bis zu diesem Zeitpunkt berücksichtigt und übermittelt werden.

Durch die Änderungshistorie kann Ursprungsinformation, d.h., Information darüber wer oder was eine Änderung der im Wissensgraphen gespeicherten Information verursacht hat, oder wann oder wie eine Änderung der im Wissensgraphen gespeicherten Information veranlasst wurde, bereitgestellt werden.

Durch die Änderungshistorie kann eine Änderung der Information im Wissensgraphen rückgängig gemacht oder repariert werden, oder mit bereits im Wissensgraphen gespeicherten Information vereinigt werden.

Durch die Änderungshistorie kann eine auf dem Wissensgraphen basierende Datenbank Information unterschiedlicher Zeitpunkte bei der Bestimmung einer Antwort auf eine Abfrage bereitstellen.

Der Wissensgraph speichert die Information in Tripeln. Ein Tripel umfasst z.B. zwei Knoten und eine Kante des Wissensgraphen, insbesondere in der Form Knoten - Prädikat - Knoten, wobei die Kante das Prädikat ist. Ein Tripel umfasst z.B. einen Knoten, ein Prädikat und ein Literal, insbesondere in der Form Knoten -Prädikat - Literal, wobei das Literal z.B. ein Wahrheitswert, d.h. Wahr bzw. Falsch, ein Text oder ein Datenwert umfasst. Ein Knoten ist z.B. eine Instanz, eine Klasse, oder eine Eigenschaft.

Die Änderungshistorie ermöglicht eine vollständige Nachvollziehbarkeit aller Änderungen, die am Wissensgraphen vorgenommen werden, bis zur kleinstmöglichen Granularität, d.h., bis zu Änderungen an einzelnen Tripeln.

Eine Vorrichtung zum Bereitstellen und/oder Speichern einer Änderungshistorie eines ersten Wissensgraphen sieht vor, dass die Vorrichtung wenigstens einen insbesondere nicht-flüchtigen Speicher umfasst, wobei auf dem wenigstens einen Speicher ein zweiter Wissensgraph gespeichert ist, wobei der zweite Wissensgraph zumindest einen Teil des ersten Wissensgraphen umfasst, wobei der zweite Wissensgraph die Änderungshistorie umfasst, wobei die Änderungshistorie wenigstens ein Tripel umfasst, das ein Tripel des ersten Wissensgraphen als Subjekt umfasst, wobei das wenigstens eine Tripel ein Prädikat und ein Objekt umfasst, wobei das Prädikat und das Objekt das Tripel des ersten Wissensgraphen mit einem Teilgraphen des zweiten Wissensgraphen, insbesondere einem RDF Graphen im zweiten Wissensgraphen, verknüpft, der eine Information über die am ersten Wissensgraphen vorgenommene Änderung umfasst. Der zweite Wissensgraph speichert zumindest einen Teil des ersten Wissensgraphen und die Änderungshistorie. Das bedeutet, eine Auswertung der Änderungshistorie ist, im Unterschied zu einer Speicherung der Änderungshistorie in einer Datei oder einem Repositorium, oder einer Datenbanktabelle, ohne Formatierungsänderungen möglich. Der erste und der zweite Wissensgraph speichert die Änderungshistorie in Tripel, d.h. ohne Komprimierung. Das bedeutet, die Auswertung der Änderungshistorie erfordert auch keine Dekomprimierung, wie bei einem Datenbank backup in eine komprimierte Datei erforderlich wäre.

Vorzugsweise ist vorgesehen, dass die Information angibt, wie sich die im ersten Wissensgraphen gespeicherte Information im Laufe der Zeit geändert hat, oder wer oder was die Änderung der im ersten Wissensgraphen gespeicherten Information verursacht hat, oder wann oder wie die Änderung der im ersten Wissensgraphen gespeicherten Information veranlasst wurde.

Vorzugsweise ist vorgesehen, dass der erste Wissensgraph Information aus der Domäne Physik, Chemie, Medizin, Biologie, insbesondere über ein technisches System, vorzugsweise eine Fabrik oder ein Gebäude oder ein Fahrzeug oder einen Sensor oder ein digitales Bildgebungssystem oder ein Rechnernetzwerk oder ein Heiz- und/oder Kühlsystem umfasst, insbesondere Information über einen digitalen Zwilling einer Fabrik oder eines Gebäudes oder eines Fahrzeugs oder eines Sensors oder eines digitalen Bildgebungssystems oder eines Rechnernetzwerks oder eines Heiz- und/oder Kühlsystems darstellen.

Beispielsweise ist vorgesehen, dass die Vorrichtung ausgebildet ist, mehrere durch die Änderung geänderte Tripel in das Subjekt je eines Tripels der Änderungshistorie aufzunehmen, wobei die jeweiligen Tripel der Änderungshistorie dasselbe Objekt und Prädikat aufweisen.

Beispielsweise umfasst die Vorrichtung eine Recheneinrichtung, wobei die Recheneinrichtung ausgebildet ist, die Änderung zu empfangen und im zweiten Wissensgraphen zu speichern, und wobei die Vorrichtung ausgebildet ist, die Information zu empfangen oder abhängig von der empfangenen Änderung oder einer Art der Änderung oder einem Zeitpunkt des Empfangs der Änderung zu bestimmen, und als Teil der Änderungshistorie im zweiten Wissensgraphen zu speichern. Die Recheneinrichtung fängt die Änderungen im ersten Wissensgraphen z.B. aus einer Kommunikation mit dem ersten Wissensgraphen ab. Die Recheneinrichtung kann ausgebildet sein, die Information über die Änderung für die Änderungshistorie ebenfalls aus der Kommunikation mit dem Wissensgraphen abzufangen, oder die Information selbst abhängig von der Änderung oder der Art der Änderung oder dem Zeitpunkt des Empfangs der Änderung hinzuzufügen.

Es kann vorgesehen sein, dass die Recheneinrichtung ausgebildet ist, eine Anfrage, insbesondere eine SPARQL-star query, zu einer Änderung zu empfangen, wobei die Vorrichtung ausgebildet ist, abhängig von der Anfrage mit dem zweiten Wissensgraphen eine Antwort auf die Anfrage zu bestimmen, wobei die Recheneinrichtung dazu ausgebildet ist, die Antwort zu senden, wobei die Antwort Information zur Änderung oder Information zum Rückgängigmachen der Änderung umfasst, wobei die Information zur Änderung angibt, wie sich die im ersten Wissensgraphen gespeicherte Information im Laufe der Zeit geändert hat, oder wer oder was die Änderung der im ersten Wissensgraphen gespeicherten Information verursacht hat, oder wann oder wie die Änderung der im ersten Wissensgraphen gespeicherten Information veranlasst wurde.

Es kann vorgesehen sein, dass die Vorrichtung ausgebildet ist, das wenigstens eine Tripel zu bestimmen, insbesondere ein Tripel zu bestimmen, das die Information umfasst, oder mehrere Tripel zu bestimmen, die die Information umfassen. Das Tripel aus der Änderungshistorie annotiert das geänderte Tripel, das die Änderung repräsentiert. Dadurch ist die Information aus dem Tripel aus der Änderungshistorie für alle Elemente aus dem Tripel, d.h. mit der kleinstmöglichen Granularität, verfügbar. Jede individuelle Änderung im ersten Wissensgraphen ist aus dem zweiten Wissensgraphen extrahierbar. Mehrere durch die Änderung geänderte Tripel bilden z.B. das Subjekt von Tripeln, die zumindest ein Teil der Information als Objekt umfassen, und welche dasselbe Prädikat aufweisen. Das Objekt ist z.B. ein Knoten eines Teilgraphs. Der Teilgraph beschreibt beispielsweise einen Teil der Information.

Es kann vorgesehen sein, dass die Änderung im ersten Wissensgraphen ein Entfernen des Tripels aus dem ersten Wissensgraph oder ein Hinzufügen des Tripels zum ersten Wissensgraphen umfasst, oder dass die Änderung im ersten Wissensgraphen ein Aktualisieren des Tripels im ersten Wissensgraphen, insbesondere durch Ersetzen des Tripels durch ein anderes Tripel, umfasst.

Ein Verfahren zum Bereitstellen und/oder Speichern einer Änderungshistorie eines ersten Wissensgraphen sieht vor, dass ein zweiter Wissensgraph bereitgestellt wird, wobei der zweite Wissensgraph zumindest einen Teil des ersten Wissensgraphen umfasst, und wobei der zweite Wissensgraph die Änderungshistorie umfasst wobei die Änderungshistorie wenigstens ein Tripel umfasst, das ein Tripel des ersten Wissensgraphen als Subjekt umfasst, wobei das wenigstens eine Tripel ein Prädikat und ein Objekt umfasst, wobei das Prädikat und das Objekt das Tripel des ersten Wissensgraphen mit einem Teilgraphen des zweiten Wissensgraphen, insbesondere einem RDF Graphen im zweiten Wissensgraphen, verknüpft, der eine Information über die am ersten Wissensgraphen vorgenommene Änderung umfasst.

Es kann vorgesehen sein, dass die Änderungshistorie bereitgestellt wird, wobei die Änderungshistorie Information umfasst, die angibt, wie sich die im ersten Wissensgraphen gespeicherte Information im Laufe der Zeit geändert hat, oder wobei die Änderungshistorie Information umfasst, die angibt wer oder was eine Änderung der im ersten Wissensgraphen gespeicherten Information verursacht hat, oder wann oder wie eine Änderung der im ersten Wissensgraphen gespeicherten Information veranlasst wurde.

Es kann vorgesehen sein, dass der erste Wissensgraph Information aus der Domäne Physik, Chemie, Medizin, Biologie, insbesondere über ein technisches System, vorzugsweise eine Fabrik oder ein Gebäude oder ein Fahrzeug oder einen Sensor oder ein digitales Bildgebungssystem oder ein Rechnernetzwerk oder ein Heiz- und/oder Kühlsystem umfasst, insbesondere Information über einen digitalen Zwilling einer Fabrik oder eines Gebäudes oder eines Fahrzeugs oder eines Sensors oder eines digitalen Bildgebungssystems oder eines Rechnernetzwerks oder eines Heiz- und/oder Kühlsystems darstellen.

Es kann vorgesehen sein, dass mehrere durch die Änderung geänderte Tripel in das Subjekt je eines Tripels der Änderungshistorie aufgenommen werden, wobei die jeweiligen Tripel der Änderungshistorie dasselbe Objekt und Prädikat umfassen.

Es kann vorgesehen sein, dass die Änderung im ersten Wissensgraphen empfangen und im zweiten Wissensgraphen gespeichert wird, und wobei die Information über die Änderung im zweiten Wissensgraphen empfangen oder abhängig von der empfangenen Änderung oder einer Art der Änderung oder einem Zeitpunkt des Empfangs der Änderung bestimmt, und als Teil der Änderungshistorie im zweiten Wissensgraphen gespeichert wird, und/oder dass eine Anfrage zu einer Änderung im ersten Wissensgraphen empfangen, abhängig von der Anfrage mit dem zweiten Wissensgraphen eine Antwort auf die Anfrage bestimmt, und die Antwort gesendet wird, wobei die Antwort Information zur Änderung oder Information zum Rückgängigmachen der Änderung umfasst, wobei die Information zur Änderung angibt, wie sich die im ersten Wissensgraphen gespeicherte Information im Laufe der Zeit geändert hat, oder wer oder was die Änderung der im ersten Wissensgraphen gespeicherten Information verursacht hat, oder wann oder wie die Änderung der im ersten Wissensgraphen gespeicherten Information veranlasst wurde.

Es kann vorgesehen sein, dass das wenigstens eine Tripel bestimmt wird, insbesondere ein Tripel, das die Information umfasst, oder mehrere Tripel bestimmt werden, die die Information umfassen.

Es kann vorgesehen sein, dass die Änderung im ersten Wissensgraphen ein Entfernen des Tripels aus dem ersten Wissensgraphen oder ein Hinzufügen des Tripels zum ersten Wissensgraphen umfasst, oder dass die Änderung im ersten Wissensgraphen ein Aktualisieren des Tripels im ersten Wissensgraphen, insbesondere durch Ersetzen des Tripels im ersten Wissensgraphen durch ein anderes Tripel, umfasst.

Eine Datenstruktur, insbesondere computerimplementierte Datenstruktur, zum Bereitstellen und/oder Speichern einer Änderungshistorie eines ersten Wissensgraphen sieht vor, dass die Datenstruktur wenigstens ein Datenfeld für einen zweiten Wissensgraphen, insbesondere für Tripel des zweiten Wissensgraphen, umfasst, wobei der zweite Wissensgraph wenigstens einen Teil des ersten Wissensgraphen umfasst, wobei der zweite Wissensgraph wenigstens ein geändertes Tripel des ersten Wissensgraphen umfasst, und wobei die Änderungshistorie wenigstens ein Tripel umfasst, das ein Tripel des ersten Wissensgraphen als Subjekt umfasst, wobei das wenigstens eine Tripel ein Prädikat und ein Objekt umfasst, wobei das Prädikat und das Objekt das Tripel des ersten Wissensgraphen mit einem Teilgraphen des zweiten Wissensgraphen, insbesondere einem RDF Graphen im zweiten Wissensgraphen, verknüpft, der eine Information über die am ersten Wissensgraphen vorgenommene Änderung umfasst.

Weitere vorteilhafte Ausführungsformen sind der folgenden Beschreibung und der Zeichnung entnehmbar. In der Zeichnung zeigt:
- Fig. 1: eine schematische Darstellung einer Datenbankstruktur,
- Fig. 2: ein Flussdiagramm mit Schritten eines Verfahrens zum Bereitstellen und/oder Speichern einer Änderungshistorie eines Wissensgraphen,
- Fig. 3: eine schematische Darstellung einer Datenstruktur.

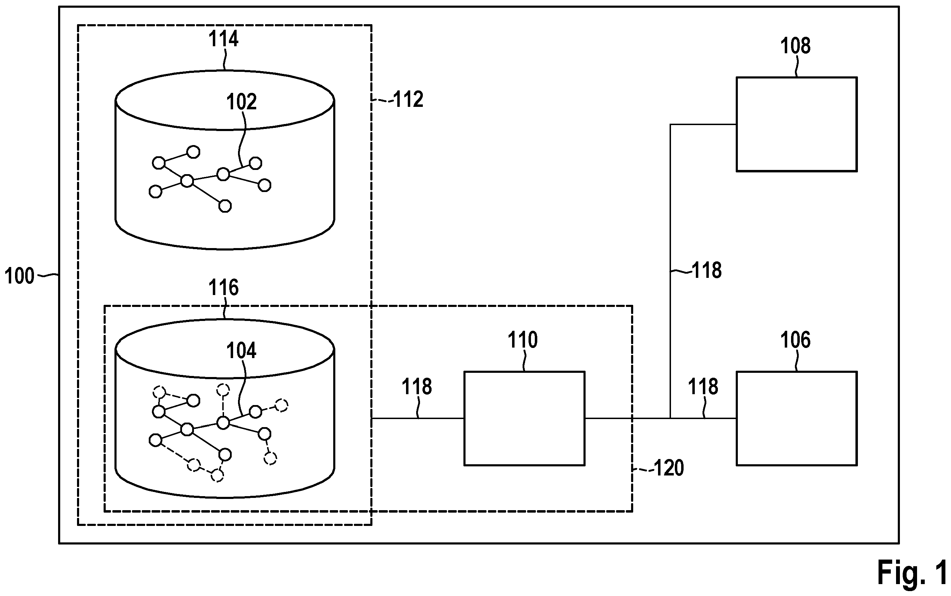

Figur 1 stellt eine schematische Darstellung einer Datenbankstruktur 100 schematisch dar.

Die Datenbankstruktur 100 umfasst einen ersten Wissensgraphen 102 und einen zweiten Wissensgraphen 104. Die Datenbankstruktur 100 ist im Beispiel über eine Anwendung verwendbar, die z.B. auf einem Client 106 oder auf einem Server 108 ablaufen kann.

Der erste Wissensgraph 102 kann Information über eine Fabrik oder ein Gebäude oder ein Fahrzeug oder einen Sensor oder ein digitales Bildgebungssystem oder ein Rechnernetzwerk oder ein Heiz- und/oder Kühlsystem umfassen.

Beispielsweise stellt der erste Wissensgraph 102 Information über einen digitalen Zwilling einer Fabrik oder eines Gebäudes oder eines Fahrzeugs oder eines Sensors oder eines digitalen Bildgebungssystems oder eines Rechnernetzwerks oder eines Heiz- und/oder Kühlsystems dar.

Die Datenbankstruktur 100 im Beispiel umfasst eine Recheneinrichtung 110.

Der erste Wissensgraph 102 und der zweite Wissensgraph 104 sind im Beispiel auf wenigstens einem Speicher 112 gespeichert. Der erste Wissensgraph 102 und der zweite Wissensgraph 104 können auf verschiedenen Speichern gespeichert sein.

Der erste Wissensgraph 102 ist im Beispiel in einem ersten Datensatz 114 gespeichert. Der zweite Wissensgraph 104 ist im Beispiel in einem zweiten Datensatz 116 gespeichert. In einer Initialisierung der Datenbankstruktur 100 kann vorgesehen sein, dass ein initialer erster Wissensgraph 102 und ein initialer zweiter Wissensgraph 104 bereitgestellt wird, wobei der zweite Wissensgraph 104 den ersten Wissensgraph 102 umfasst. Der initiale zweite Wissensgraph 104 umfasst im Beispiel den ersten initialen Wissensgraph 102 vollständig.

Der zweite Wissensgraph 104 umfasst zudem eine Änderungshistorie.

Die Recheneinrichtung 110 ist ausgebildet, die Änderungshistorie zu bestimmen.

Die Recheneinrichtung 110 umfasst z.B. eine Software Architektur und Module, die ausgebildet sind, den zweiten Wissensgraphen 104 und die Änderungshistorie zu bestimmen.

Die Recheneinrichtung 110 ist im Beispiel zur Kommunikation über eine jeweilige Kommunikationsverbindung 118 mit dem wenigsten einen Speicher 112, dem Client 106 und/oder dem Server 108 ausgebildet.

Im Beispiel ist die Recheneinrichtung 110 ausgebildet, Anfragen an den ersten Wissensgraphen 102 nach Informationen zu empfangen und Antworten auf die Anfragen an den ersten Wissensgraphen 102 zu bestimmen und zu senden. Im Beispiel ist die Recheneinrichtung 110 ausgebildet, die Antworten auf die Anfragen an den ersten Wissensgraphen 102 abhängig von Information zu bestimmen, die im ersten Wissensgraphen 102 gespeichert ist. Die Information ist im ersten Wissensgraphen 102 in Form von Tripeln gespeichert. Die Antwort auf eine Anfrage umfasst im Beispiel mehrere Tripel, d.h. Fakten. Die Anfrage definiert im Beispiel das Subjekt, das Objekt, oder das Prädikat wenigstens eines Tripels, das als Antwort gesucht ist.

Die Recheneinrichtung 110 ist ausgebildet, eine Anfrage zum Ändern des ersten Wissensgraphen 102 zu empfangen und im ersten Wissensgraphen 102 gespeicherte Information abhängig von der Anfrage zum Ändern zu ändern. Die Anfrage zum Ändern definiert im Beispiel das Subjekt, das Objekt, oder das Prädikat wenigstens eines zu ändernden Tripels. Die Anfrage zum Ändern definiert beispielsweise wie das Subjekt, das Objekt, oder das Prädikat des wenigstens einen zu ändernden Tripels zu ändern ist.

Beispielsweise ist die Recheneinrichtung 110 ausgebildet, eine Anfrage zum Hinzufügen, zum Entfernen, oder zum Ändern, d.h. zum Entfernen und Hinzufügen von Information, zu empfangen. Beispielsweise ist die Recheneinrichtung 110 ausgebildet, Information abhängig von der Anfrage zum Hinzufügen hinzuzufügen. Beispielsweise ist die Recheneinrichtung 110 ausgebildet, Information abhängig von der Anfrage zum Entfernen zu entfernen. Beispielsweise ist die Recheneinrichtung 110 ausgebildet, Information abhängig von der Anfrage zum Ändern zu entfernen und andere Information hinzuzufügen. Die Anfrage zum Hinzufügen oder zum Entfernen definiert im Beispiel das Subjekt, das Objekt, oder das Prädikat wenigstens eines hinzuzufügenden bzw. zu entfernenden Tripels. Die Anfrage zum Hinzufügen definiert beispielsweise das Subjekt, das Objekt, oder das Prädikat des wenigstens einen hinzuzufügenden Tripels.

Eine Vorrichtung 120 zum Bereitstellen und/oder Speichern einer Änderungshistorie des ersten Wissensgraphen 102 ist ausgebildet, Anfragen an den zweiten Wissensgraphen 104 nach Informationen zu empfangen und Antworten auf die Anfragen an den zweiten Wissensgraphen 104 zu bestimmen und zu senden. Die Vorrichtung 120 ist ausgebildet, die Antworten abhängig von Information zu bestimmen, die im zweiten Wissensgraphen 104 gespeichert ist. Die Vorrichtung 120 ist ausgebildet, die Anfragen vom Client 106 oder Server 108 zu empfangen und die Antwort an den Client 106 und/oder den Server 108 zu senden.

Die Vorrichtung 120 ist ausgebildet, die Anfrage zum Ändern des ersten Wissensgraphen 102 zu empfangen und im zweiten Wissensgraphen 104 gespeicherte Information abhängig von der Anfrage zum Ändern zu ändern. Die Vorrichtung 120 ist ausgebildet, die Anfragen zum Ändern vom Client 106 oder Server 108 zu empfangen.

Beispielsweise ist die Vorrichtung 120 ausgebildet, die Anfrage zum Hinzufügen, zum Entfernen, oder zum Ändern, d.h. zum Entfernen und Hinzufügen von Information, zu empfangen. Beispielsweise ist die Vorrichtung 120 ausgebildet, Information abhängig von der Anfrage zum Hinzufügen hinzuzufügen. Beispielsweise ist die Vorrichtung 120 ausgebildet, Information abhängig von der Anfrage zum Entfernen zu entfernen. Beispielsweise ist die Vorrichtung 120 ausgebildet, Information abhängig von der Anfrage zum Ändern zu entfernen und andere Information hinzuzufügen.

Die Information ist im zweiten Wissensgraphen 104 in Form von Tripeln gespeichert.

Die Vorrichtung 120 ist z.B. ausgebildet, die Anfragen an den zweiten Wissensgraphen 104 und die Antworten des zweiten Wissensgraphen 104 und die Anfragen an den ersten Wissensgraphen 102 und die Antworten des ersten Wissensgraphen 102 wie für die Recheneinrichtung 110 beschrieben zu verarbeiten.

Im Beispiel ist die Vorrichtung 120 ausgebildet, den zweiten Wissensgraphen 104 so zu ändern, dass der zweite Wissensgraph 104 den durch die Anfrage zum Ändern geänderten ersten Wissensgraph 102 umfasst. Der erste Wissensgraph 102 ist im Beispiel eine Teilmenge des zweiten Wissensgraphen 104. Im Beispiel ist jedes Tripel im zweiten Wissensgraphen 104 zusätzlich mit Metainformationen versehen. Und im zweiten Wissensgraphen 104 kommen zudem im Beispiel alle jemals bis zu diesem Zeitpunkt im ersten Wissensgraph 102 existierenden Tripeln vor.

Der im zweiten Wissensgraphen 104 enthaltene erste Wissensgraph 102 oder der im zweiten Wissensgraphen enthaltene Teil des ersten Wissensgraphen 102 ist eine Teilmenge des ersten Wissensgraphen 102. Der zweite Wissensgraph 104 umfasst nach einer Änderung des ersten Wissensgraphen 102 zumindest einen Teil des ersten Wissensgraphen 102 vor der Änderung. Im Beispiel ist nach der Änderung der geänderte erste Wissensgraph 102 vollständig im zweiten Wissensgraphen 104 enthalten.

Der zweite Wissensgraph 104 umfasst zudem die Änderungshistorie. Im Beispiel umfasst die Änderungshistorie die Tripel des initialen ersten Wissensgraphen 102, die durch eine Änderung des ersten Wissensgraphen 102 aus dem ersten Wissensgraphen 102 entfernt wurden. Die Änderungshistorie umfasst zudem für die aus dem ersten Wissensgraphen 102 entfernten Tripel und für Tripel, die dem ersten Wissensgraphen 102 in einer Änderung hinzugefügt wurden, oder für Tripel des ersten Wissensgraphen 102, die in einer Änderung geändert wurden, je ein Tripel das Information über die Änderung umfasst oder jeweils mehrere Tripel, die Information über die Änderung umfassen.

Die Information gibt beispielsweise an, wie sich die im ersten Wissensgraphen 102 gespeicherte Information im Laufe der Zeit geändert hat.

Die Information gibt beispielsweise an, wer oder was die Änderung der im ersten Wissensgraphen 102 gespeicherten Information verursacht hat.

Die Information gibt beispielsweise an, wann oder wie eine Änderung der im ersten Wissensgraphen 102 gespeicherten Information veranlasst wurde

Die Vorrichtung 120 ist ausgebildet, für die Anfrage zum Ändern des ersten Wissensgraphen 102 Information zur Anfrage zum Ändern zu empfangen oder zu bestimmen. Die Vorrichtung 120 ist ausgebildet, die Information zur Anfrage zum Ändern in einer Änderungshistorie im zweiten Wissensgraphen 104 abzuspeichern. Die Information zur Anfrage zum Ändern gibt beispielsweise an, wer oder was eine Änderung der im ersten Wissensgraphen 102 gespeicherten Information verursacht hat, oder wann oder wie eine Änderung der im ersten Wissensgraphen 102 gespeicherten Information veranlasst wurde. Die Vorrichtung 120 ist ausgebildet, die Information zur Anfrage zum Ändern vom Client 106 oder Server 108 zu empfangen.

Im Beispiel umfasst die Vorrichtung 120 die Recheneinrichtung 110 und den zweiten Wissensgraphen 104. Es kann vorgesehen sein, dass die Vorrichtung 120 den ersten Wissensgraphen 102 umfasst. Es kann vorgesehen sein, dass die Vorrichtung 120 den wenigstens einen Speicher 112 umfasst.

Es kann vorgesehen sein, dass die Vorrichtung 120 den Client 106 und/oder den Server 108 umfasst.

Im Beispiel ist die Recheneinrichtung 110 ausgebildet, die Anfrage zum Ändern und die Information zur Anfrage zum Ändern zu empfangen und den zweiten Wissensgraphen 104 abhängig von der Anfrage und der Information zur Anfrage zu ändern.

Im Beispiel ist die Recheneinrichtung 110 ausgebildet, die Anfrage an den zweiten Wissensgraphen 104 zu empfangen und die Antwort auf die Anfrage an den zweiten Wissensgraphen 104 zu bestimmen und zu senden.

Im Beispiel ist die Recheneinrichtung 110 ausgebildet, die Antwort abhängig von Information zu bestimmen, die im zweiten Wissensgraphen 104 gespeichert ist.

Die Anfrage an den zweiten Wissensgraphen 104 kann Information aus dem ersten Wissensgraphen 102 oder aus der Änderungshistorie betreffen.

Es kann hier nach Informationen gesucht werden, die aktuell gar nicht mehr im ersten Wissensgraph 102 enthalten sind, aber früher einmal waren, da sie im zweiten Wissensgraph 104 als Historie gespeichert sind. Die Suche kann nicht nur die Herkunft, sondern auch alle anderen Daten, d.h. Tripel, betreffen.

In einem Beispiel für eine Implementierung wird die im zweiten Wissensgraphen 104 gespeicherte Information als Menge von RDF Tripeln und RDF-star Tripeln implementiert. Beispielsweise wird die jeweilige Anfrage oder Antwort gemäß der SPARQL-star Abfragesprache implementiert.

Eine Anfrage an den zweiten Wissensgraphen 104 ist z.B. eine SPARQL query oder SPARQL-star query, insbesondere eine SPARQL-star/Update query, eine SPARQL-star/SELECT, eine SPARQL/SELECT oder eine SPARQstar/CONSTRUCT query.

Im Beispiel werden SPARQL queries für beide Wissensgraphen verwendet. Jedoch für den ersten Wissensgraphen 102 ausschließlich SPARQL queries, für den zweiten Wissensgraphen 104 überwiegend SPARQL-star queries, und in einigen Fällen SPARQL queries.

Konkrete Beispiele für die Anfrage an den ersten Wissensgraphen 102:
- SPARQL/Update DELETE/INSERT WHERE, SPARQL/Update DELETE DATA, SPARQL/Update INSERT DATA für die Veränderung
- SPARQL/CONSTRUCT queries für die Berechnung des Deltas der Veränderung

Konkrete Beispiele für die Anfrage an den zweiten Wissensgraphen 104:
- SPARQL-star/Update INSERT DATA für die Veränderung
- SPARQL-star/SELECT oder SPARQL/SELECT für die Abfrage der Änderungshistorie
- SPARQL-star/CONSTRUCT oder SPARQL-star/Update DELETE/INSERT WHERE für das Wiederherstellen älterer Versionen

Der erste Wissensgraph 102 umfasst im Beispiel Tripel, die die im ersten Wissensgraphen 102 gespeicherte Information darstellen. Der zweite Wissensgraph 104 umfasst Tripel, die die Tripel aus dem ersten Wissensgraphen 102 darstellen und zusätzliche RDF Tripel und RDF-star Tripel, die die Änderungshistorie darstellen.

Die Änderungshistorie umfasst z.B. Information, die angibt, wie sich die im ersten Wissensgraphen 102 gespeicherte Information im Laufe der Zeit geändert hat.

Die Änderungshistorie umfasst z.B. Information, die angibt wer oder was eine Änderung der im ersten Wissensgraphen 102 gespeicherten Information verursacht hat.

Die Änderungshistorie umfasst z.B. Information, die angibt wann oder wie eine Änderung der im ersten Wissensgraphen 102 gespeicherten Information veranlasst wurde.

In einem Beispiel ist vorgesehen, dass die Vorrichtung 120 insbesondere die Recheneinrichtung 110 ausgebildet ist, die SPARQL query zu empfangen und mit einer Ontologie zu verarbeiten.

Es kann vorgesehen sein, dass die Vorrichtung 120 insbesondere die Recheneinrichtung 110 wenn die Query eine SPARQL/Update DELETE DATA und/oder INSERT DATA query ist, ausgebildet ist, eine SPARQL query zur Durchführung einer Änderung am ersten Wissensgraphen 102 zu empfangen und zur Durchführung der Änderung am ersten Wissensgraphen 102 unverändert an den ersten Wissensgraphen 102 weiterzuleiten.

Die Vorrichtung 120 insbesondere die Recheneinrichtung 110 ist z.B. ausgebildet, abhängig von der Ontologie und der SPARQL query RDF-star Tripel und/oder RDF Tripel aus dem zweiten Wissensgraphen 104 zu bestimmen.

Die Vorrichtung 120 insbesondere die Recheneinrichtung 110 ist z.B. ausgebildet, abhängig von der Ontologie und der SPARQL query eine Abfrage auf dem zweiten Wissensgraphen 104 auszuführen, die ein oder mehrere Tripel aus dem zweiten Wissensgraphen 104 als Antwort auf die SPARQL query liefert.

Die Ontologie ist eine Erweiterung der von Belhajjame, K.; Cheney, J.; Corsar, D.; Garijo, D.; Soiland-Reyes, S.; Zednik, S.; Zhao, J. beschriebenen PROV-O: The PROV Ontology. W3C recommendation (2013), https://www.w3.org/TR/provo/.

Die Ontologie umfasst die von PROV-O definierten Hauptklassen "prov:Entity", "prov:Activity", und "prov:Agent". Die Ontologie umfasst die von PROV-O definierten Objekteigenschaften "prov:wasGeneratedBy", "prov:waslnvalidatedBy" und "prov:wasAssociatedWith". Die Ontologie umfasst die von PROV-O definierten Datentypeneigenschaften "prov:generatedAtTime" und "prov:invalidatedAt-Time".

Die Erweiterung verfeinert die Klasse "prov:Entity" mit drei gegenüber PROV-O neuen Klassen:

```
 "provs:TripleChangeSet":
```

Die Klasse "provs:TripleChangeSet" ist eine direkte Unterklasse der Klasse "prov: Entity".

Die Klasse "provs:TripleChangeSet" ist eine Klasse für eine Menge von Tripeln aus dem ersten Wissensgraphen 102, die durch eine Änderung geändert wur- den.

```
 "provs:TripleGenerationSet":
```

Die Klasse "provs:TripleGenerationSet" ist eine Unterklasse der Klasse "provs:TripleChangeSet". Die Klasse "provs:TripleGenerationSet" ist eine Klasse für eine Menge von Tripeln, die durch eine Änderung in den ersten Wissensgraphen 102 eingefügt wurden.

```
"provs:TriplelnvalidationSet",
```

Die Klasse " provs:TriplelnvalidationSet " ist eine Unterklasse der Klasse "provs:TripleChangeSet". Die Klasse " provs:TriplelnvalidationSet" ist eine Klasse für eine Menge von Tripeln, die durch eine Änderung aus dem ersten Wissensgraphen 102 entfernt wurden.

Die Erweiterung umfasst eine gegenüber PROV-O neue Objekteigenschaft "provs:belongsTo".

Die Objekteigenschaft "provs:belongsTo" wird von RDF-star unterstützt, d.h. die Objekteigenschaft "provs:belongsTo" kann dazu verwendet ein geändertes Tripel mit einer Instanz der Klasse "provs:TripleGenerationSet" oder einer Instanz der Klasse "provs:TriplelnvalidationSet" im zweiten Wissensgraphen 104 mit Information zur Änderung zu annotieren. Im Beispiel sind TripleGenerationSet bzw. TriplelnvalidationSet das Objekt, und das geänderte Triple das Subjekt.

Optional umfasst die Erweiterung eine Klasse "provs:Query" mit der eine SPARQL/Update query, die die Änderung verursacht hat, als Information zur Änderung im zweiten Wissensgraphen 104 gespeichert werden kann. Eine Instanz der Klasse "provs:Query" umfasst z.B. die SPARQL/Update query als Text.

Die Information zur Änderung ist im Beispiel in RDF Tripeln und RDF-star Tripeln enthalten. Ein RDF-star Tripel umfasst ein Subjekt, ein Prädikat und ein Objekt. Ein RDF-star Tripel hat die Besonderheit, dass Subjekt oder Objekt selber wieder ein Tripel sein können. Hier werden Tripels im Subjekt von RDF-star Tripeln verwendet. Die Ontologie stellt ein Vokabular bereit, das dazu geeignet ist, die Änderung in einem RDF Tripel oder RDF-star Tripel oder in mehreren RDF Tripeln oder RDF-star Tripeln zu beschreiben.

Eine beispielhafte SPARQL/Update query umfasst z.B. als subqueries eine SPARQL/Update DELETE DATA query und eine SPARQL/Update INSERT DATA query:

```
 DELETE DATA{
 d:ACU-0b9aff9c o:isReleased false .
 };
 INSERT DATA{
 d:ACU_0b9aff9c o:isReleased true .
 d:ACU_0b9aff9c o:releaseDATE "2023-11-12"^^xsd:date .
 };
```

wobei "o:isReleased" eine Datentypeigenschaft " isReleased " und "d:ACU_0b9aff9c" eine Instanz "ACU_0b9aff9c" darstellt. Diese SPARQL/Update query ändert den Status "isReleased" einer Instanz von "false" in "true" und fügt das Datum "releaseDATE" hinzu.

Die subquery "DELETE DATA" entfernt ein Tripel aus dem ersten Wissensgraph 102, nämlich das Tripel, dass der Instanz "ACU_0b9aff9c" den Wert "false" der Datentypeigenschaft "isReleased" zuordnet.

Die subquery "INSERT DATA" fügt ein Tripel dem ersten Wissensgraph 102 hinzu, nämlich das Tripel, dass der Instanz "ACU_0b9aff9c" den Wert "true" der Datentypeigenschaft "isReleased" zuordnet.

Die subquery "INSERT DATA" fügt ein zweites Triple dem ersten Wissensgraph 102 hinzu, nämlich das Tripel, dass der Instanz "ACU_0b9aff9c" den Wert "2023-11-12"^^xsd:date der Datentypeigenschaft "releaseDate" zuordnet.

Es kann vorgesehen sein, dass die Vorrichtung 120 insbesondere die Recheneinrichtung 110 ausgebildet ist, eine SPARQL query zu empfangen und mit einer Transformation in eine SPARQL-star query zu transformieren. Es kann vorgesehen sein, dass die Vorrichtung 120 insbesondere die Recheneinrichtung 110 ausgebildet ist, die SPARQL-star query auf den zweiten Wissensgraphen 104 anzuwenden.

Aufgrund der RDF-star Tripel und der spezifischen gewählten Ontologie-Repräsentation wird weniger Speicherplatz im Vergleich zu RDF reification benötigt, bei der Metainformationen zu einem Tripel folgendermaßen repräsentiert werden müssen, weil keine Metainformationen zu Tripeln mit RDF darstellbar sind:
tripleA hasSubject subjectlnstance.
tripleA hasPredicate propertyIRI.
tripleA hasObject objectlnstanceORLiteral.
tripleA hasMetalnfo "meta info..."

Es werden also mindestens 4 Tripel statt einem benötigt.

In einem Beispiel werden beim Speichern der Änderungen oder der Änderungshistorie lediglich Daten im zweiten Wissensgraphen 104 geschrieben, ohne Daten vorher aus dem zweiten Wissensgraphen 104 zu lesen oder im zweiten Wissensgraphen 104 zu finden und ohne bestehende Daten des zweiten Wissensgraphen anzupassen. Die hohe Effizienz beim Speichern der Änderungen und Änderungshistorie im zweiten Wissensgraph 104 liegt darin, dass dort lediglich Daten geschrieben werden müssen, ohne Daten vorher zu lesen/finden und ohne bestehende Daten anzupassen. Die generierten SPARQL-star/INSERT DATA queries enthalten quasi alle RDF und RDF-star Tripel explizit und müssen lediglich dem zweiten Wissensgraph 104 hinzugefügt werden, ohne Leseoperation und ohne Änderung bestehender Tripel.

Beim Lesen der Änderungshistorie ist die gewählte Datenstruktur einfacher und schneller zu lesen als mit RDF reification und der Verwendung von SPARQL.

Dies bietet im Vergleich zur RDF reification und SPARQL auch die Möglichkeit eine ältere Version des ersten Wissensgraphen 102 mit geringeren Rechenressourcen schneller zu bestimmen.

Die Transformation selbst wird anschließend am Beispiel der Transformation der SPARQL/Update query in die SPARQL-star/Update query beschrieben.

Als Ergebnis der SPARQL-star/Update query umfasst der zweite Wissensgraph 104 das entfernte Tripel eingebettet in ein erstes RDF-star Tripel, d.h. als Subjekt des ersten RDF-star Tripels. Das erste RDF-star Tripel umfasst ein Prädikat mit der Objekteigenschaft "provs:belongsTo" und als Objekt eine Instanz der Klasse "provs:TripleInvalidationSet". Das bedeutet, das erste RDF-star Tripel assoziiert das entfernte Tripel über die Objekteigenschaft "provs:belongsTo" mit einer Instanz der Klasse "provs:TriplelnvalidationSet".

Eine Änderung kann jeweils mehrere Tripel entfernen und/oder hinzufügen. Im Beispiel umfasst die Änderung ein gelöschtes und zwei hinzugefügte Tripel. Das erste RDF-star Tripel ist das gelöschte, das zweite RDF-star Tripel und das dritte RDF-star Tripel sind die hinzugefügten Tripel. Als Ergebnis der SPARQL-star/Update query umfasst der zweite Wissensgraph 104 die beiden hinzugefügten Tripel eingebettet in ein zweites bzw. drittes RDF-star Tripel, d.h. als Subjekt des zweiten bzw. dritten RDF-star Tripels. Das zweite bzw. dritte RDF-star Tripel umfasst ein Prädikat mit der Objekteigenschaft "provs:belongsTo" und als Objekt eine Instanz der Klasse "provs:TripleGenerationSet". Das bedeutet, das zweite bzw. dritte RDF-star Tripel assoziiert die beiden hinzugefügten Tripel über die Objekteigenschaft "provs:belongsTo" mit derselben Instanz der Klasse "provs:TripleGenerationSet".

Der zweite Wissensgraph 104 kann weitere Tripel umfassen, die die Änderung beschreiben. Im folgenden Beispiel sind die ersten drei Tripel RDF-star, und alle weiteren sind normale RDF Tripel.

```
 « d:ACU_0b9aff9c o:isReleased false »
 provs:belongsTo s:TriplelnvalidationSet_2834417e.
```

```
 « d:ACU_0b9aff9c o:isReleased true »
 provs:belongsTo s:TripleGenerationSet_2834417e .
```

```
 < < d:ACU_0b9aff9c o:releaseDate "2023-11-12"^^xsd:date >>
 provs:belongsTo s:TripleGenerationSet_2834417e .
 s:TriplelnvalidationSet_2834417e rdf:type provs:TriplelnvalidationSet ;
 prov:invalidatedAtTime "2023-11-13T12:36:18.444Z"^^xsd:dateTime ;
 prov:waslnvalidatedBy s:Activity_2834417e;
```

```
 s: TripleGenerationSet_2834417 e
 rdf:type provs:TripleGenerationSet ;
 prov:generatedAtTime "2023-11-13T12:36:18.444Z"^^xsd:dateTime ;
 prov:wasGeneratedBy s:Activity_2834417e ;
```

```
 s:Activity_2834417e
 rdf:type prov:Activity ;
 rdfs:label "released ACU and added a release date" ;
 prov:wasAssociatedWith s:Agent_"Agent Name";
```

```
 s:Agent_ "Agent Name"
 rdf:type prov:Agent ;
 rdfs:label " "Agent Name"" ;
```

Im Beispiel repräsentieren Instanzen der PROV-O Klasse "prov:Agent" einen Urheber der Änderung und Instanzen der PROV-O Klasse "prov:Activity" eine Aktivität, die die Änderung verursacht hat. Im Beispiel repräsentiert eine PROV-O Datentypeigenschaft "prov:invalidatedAtTime" einen Zeitpunkt des Entfernens, "prov:wasInvalidatedBy" die Aktivität die das Entfernens ausgelöst hat, "prov:generatedAtTime" einen Zeitpunkt des Erzeugens, "prov:wasGeneratedBy" die Aktivität die das Erzeugen ausgelöst hat und "prov:wasAssociatedWith" den Urheber der Aktivität. "Agent Name" kann eine Person oder eine Applikation identifizieren.

Im Beispiel umfasst die Änderungshistorie RDF Tripel und RDF-star Tripel, die Information über jeweilige inkrementelle Änderungen, die am ersten Wissensgraphen 102 vorgenommen werden, umfasst.

Im Beispiel umfasst der zweite Wissensgraph 104 je Tripel aus dem ersten Wissensgraphen 102 wenigstens ein RDF-star Tripel, das die Information über die Änderung verknüpft.

Es kann vorgesehen sein, dass mehrere RDF-star Tripel mit demselben Objekt und Prädikat im zweiten Wissensgraphen 104 existieren. Sie annotieren die gleichzeitig geänderten Tripel mit derselben Änderung. Beispielsweise ist ein RDF-star Tripel im Objekt eine Instanz, für das über weitere RDF Tripel die Herkunft der Tripel definiert ist.

Ein Ergebnis der Transformation der beispielhaften SPARQL/Update query in eine beispielhafte SPARQL-star/Update query ist:

```
 INSERT DATA {
 « d:ACU_0b9aff9c o:isReleased false »
 provs:belongsTo s:TriplelnvalidationSet_2834417e.
 « d:ACU_0b9aff9c o:isReleased true »
 provs:belongsTo s:TripleGenerationSet_2834417e.
 « d:ACU_0b9aff9c o:releaseDate "2023-11-12"^^xsd:date >>
 provs:belongsTo s:TripleGenerationSet_2834417e. s:Triplelnvalidation-
 Set_2834417e rdf:type provs:TriplelnvalidationSet.
 s:TriplelnvalidationSet_2834417e prov:invalidatedAtTime
  "2023-11-13T12:36:18.444Z"^^xsd:dateTime.
  s:TripleInvalidationSet_2834417e prov:waslnvalidatedBy s:Activity_2834417e.
  s:TripleGenerationSet_2834417e rdf:type provs:TripleGenerationSet.
  s:TripleGenerationSet_2834417e prov:generatedAtTime
  "2023-11-13T12:36:18.444Z"^^xsd:dateTime.
  s:TripleGenerationSet_2834417e prov:wasGeneratedBy s:Activity_283447e.
  s:Activity_2834417e rdf:type prov:Activity.
  s:Activity_2834417e rdfs:label "released ACU and added a release date". S:Ac-
  tivity_2834417e prov:wasAssociatedWith s:Agent_ "Agent Name".
  s:Agent_ "Agent Name" rdf:type prov:Agent.
  s:Agent_"Agent Name" rdfs:label ""Agent Name"".
  }
```

Mit 2834417e wird im Beispiel ein eindeutiger Identifier bezeichnet, welcher einer jeden neuen Instanz als Postfix angefügt wird, um zu gewährleisten, dass es keine andere Instanz im zweiten Wissensgraph 104 gibt, mit der die Instanz kollidiert.

Der Identifier einer Instanz ist zum Beispiel s: TriplelnvalidationSet_2834417e in Präfix-Notation. Der Präfix "s" ist ein Platzhalter für eine URL, z.B. http://www.bosch.com/semantics#, wodurch der Identifier der Instanz tatsächlich die URL http://www.bosch.com/semantics#TriplelnvalidationSet_2834417e ist.

Die Transformation verwendet im Beispiel ein vordefiniertes SPARQL-star Template, das die Struktur und den möglichen Inhalt der SPARQL-star/Update query definiert.

Beide subqueries (DELETE DATA, INSERT DATA) resultieren in nur einer INSERT DATA SPARQL-star query, die oben bereits beschrieben wurde.

Optional kann eine Transformation einer SPARQL DELETE INSERT WHERE query vorgesehen sein, die über eine WHERE-Klausel verfügt, mit der Tripel aus dem ersten Wissensgraphen 102 bestimmt werden. Eine DELETE bzw. INSERT-Klausel der Query kann diese in der WHERE-Klausel bestimmten Tripel löschen bzw. einfügen. Beispielsweise sieht die Transformation eine erste zusätzliche SPARQL CONSTRUCT Query vor, mit der die zu entfernenden Tripel bestimmt werden. Beispielsweise ist vorgesehen, die mit der ersten zusätzlichen SPARQL CONSTRUCT Query ermittelten Tripel zu entfernen. Beispielsweise sieht die Transformation eine zweite zusätzliche SPARQL-star CONSTRUCT Query vor, mit dem die hinzuzufügenden Tripel bestimmt werden. Beispielsweise ist vorgesehen, die mit der zweiten zusätzlichen SPARQL-star CONSTRUCT Query ermittelten Tripel hinzuzufügen.

Die Vorrichtung 120 insbesondere die Recheneinrichtung 110 kann ausgebildet sein, die Änderungshistorie auszuwerten. Beispielsweise ist die Vorrichtung 120 insbesondere die Recheneinrichtung 110 ausgebildet, eine Abfrage der Änderungshistorie auf den zweiten Wissensgraphen 104 anzuwenden. Da die geänderten Tripel aus dem ersten Wissensgraphen 102 als Subjekt der RDF-star Tripel im zweiten Wissensgraph 104 gespeichert sind, kann direkt nach dem Subjekt, dem Objekt, und/oder dem Prädikat der geänderten Tripel gesucht werden. Beispielweise umfasst die Abfrage ein Subjekt und ein Prädikat und ein Objekt des gesuchten Tripels.

Beispielsweise umfasst die Abfrage ein Subjekt und ein Prädikat des gesuchten Tripels und einen Platzhalter für das Objekt des oder der gesuchten Tripels. Beispielsweise umfasst die Abfrage ein Subjekt des gesuchten Tripels und einen Platzhalter für das Prädikat und das Objekt des oder der gesuchten Tripels. Beispielsweise umfasst die Abfrage ein Objekt und ein Prädikat des gesuchten Tripels und einen Platzhalter für das Subjekt des oder der gesuchten Tripels. Beispielsweise umfasst die Abfrage ein Objekt des gesuchten Tripels und einen Platzhalter für das Prädikat und das Subjekt des oder der gesuchten Tripels. Beispielsweise umfasst die Abfrage ein Subjekt und ein Objekt des gesuchten Tripels und einen Platzhalter für das Prädikat des oder der gesuchten Tripels. Beispielsweise umfasst die Abfrage ein Prädikat des gesuchten Tripels und einen Platzhalter für das Subjekt und das Objekt des oder der gesuchten Tripels.

Eine beispielhafte SPARQL-star/SELECT query umfasst z.B. folgende Zuordnung von Platzhaltern zu einem Suchmuster

```
 SELECT ?time ?action ?subject ?pred ?object ?agentLabel ?activityLabel
 WHERE{
 {?tripleChangeSet rdf:type provs:TripleGenerationSet.
  ?tripleChangeSet prov:wasGeneratedBy ?activity.
  ?tripleChangeSet prov:generatedAtTime ?time.
  FILTER (?time > "2023-11-13T12:00:00.000Z"^^xsd:dateTime)
  BIND ("CREATED" AS ?action).
 } UNION {
  ?tripleChangeSet rdf:type provs:TriplelnvalidationSet.
  ?tripleChangeSet prov:waslnvalidatedBy ?activity.
  ?tripleChangeSet prov:invalidatedAtTime ?time.
  FILTER (?time > "2023-11-13T12:00:00.000Z"^^xsd:dateTime)
  BIND ("DELETED" AS ?action).
 }
  ?activity rdfs:label ?activityLabel.
  ?activity prov:wasAssociatedWith ?agent.
  ?agent rdfs:label ?agentLabel.
  <<?subject ?pred ?object>> provs:belongsTo ?tripleChangeSet.
  }
```

Die Query definiert eine Suche nach provs:TripleGenerationSet Instanzen (?tripleChangeSet rdf:type provs:TripleGenerationSet.), provs:TriplelnvalidationSet Instanzen (?tripleChangeSet rdf:type provs:TriplelnvalidationSet.) kombiniert mit weiteren Bedingungen.

Die Query sucht damit nach Änderungen, da die Änderungen über diese beiden Typen von Instanzen im zweiten Wissensgraphen 104 verankert sind. Die Query sucht damit nach Änderungen mit weiteren Einschränkungen, z.B. dass eine bestimmte untere oder obere Zeitschranke gegeben ist.

Im Suchmuster definieren FILTER eine Bedingung und BIND weist der Variablen ?action im Suchmuster einen String-Wert z.B. "CREATED" oder "DELETED" zu. D.h. in der Query-Antwort ist zum jeweiligen Tripel aufgrund des String-Werts "CREATED" ersichtlich, dass es ein hinzugefügtes Tripel ist. Die gelöschten Tripel erhalten den Wert "DELETED" für die Variable ?action.

Im Suchmuster repräsentiert ?time ein Platzhalter für den Zeitpunkt der Änderung, ?subject ein Platzhalter für das Subjekt des gesuchten, ?pred ein Platzhalter für das Prädikat des gesuchten Tripel, ?object ein Platzhalter für das Objekt des gesuchten Tripel, ?agentLabel ein Platzhalter für den Verursacher, und ?activityLabel ein Platzhalter für die Aktivität, die die Änderung verursacht hat.

Eine Beispielhafte Sortierabfrage nach dem Zeitpunkt der Änderung eines Tripels aus dem ersten Wissensgraphen 102 in absteigender Reihenfolge ist z.B.

```
 ORDER BY DESC(?time).
```

Eine SPARQL-star CONSTRUCT Query kann zur Wiederherstellung des ersten Wissensgraphen 102 zu einem vorgebbaren Zeitpunkt verwendet werden. Ein Beispiel für die Query umfasst:

```
 CONSTRUCT { ?subject ?pred ?object }
 WHERE {
  BIND( "2023-08-30T10:30:54.761 Z"^^xsd:dateTime AS ?pastDateTime)
  ?tripleGenerationSet a provs:TripleGenerationSet.
  ?tripleGenerationSet prov:generatedAtTime ?timeOfGeneration.
  FILTER (?timeOfGeneration <= ?pastDateTime).
  <<?subject ?pred ?object>> provs:belongsTo ?tripleGenerationSet.
  FILTER NOT EXISTS {
         <<?subject ?pred ?object>> provs:belongsTo ?tripleInvalidationSet.
         ?tripleInvalidationSet prov:invalidatedAtTime ?timeOfInvalidation.
         FILTER (?timeOfInvalidation > ?timeOfGeneration &&
                ?timeOfInvalidation <= ?pastDateTime)
  }
 }
```

In der Query repräsentiert ?pastDateTime einen Platzhalter für den vorgebbaren Zeitpunkt.

Der Filter "FILTER (?timeOfGeneration <= ?pastDateTime)" bewirkt, dass nur erzeugte Tripel (provs:TripleGenerationSet) gesucht werden, die vor dem gegebenen Zeitpunkt erzeugt wurden.

Der FILTER NOT EXISTS Block stellt sicher, dass Tripel, die zwar vor dem gegebenen Zeitpunkt erzeugt wurden, hinterher und noch vor dem gegebenen Zeitpunkt aber wieder gelöscht wurden, ausgeschlossen werden. Denn diese Tripel existieren tatsächlich zum gegebenen Zeitpunkt nicht mehr.

Die allgemeine Logik dieser Query ist:
Suche alle vor dem gegebenen Zeitpunkt erzeugten Tripel. Sortiere diejenigen aus, die später, noch vor dem gegebenen Zeitpunkt wieder gelöscht wurden.

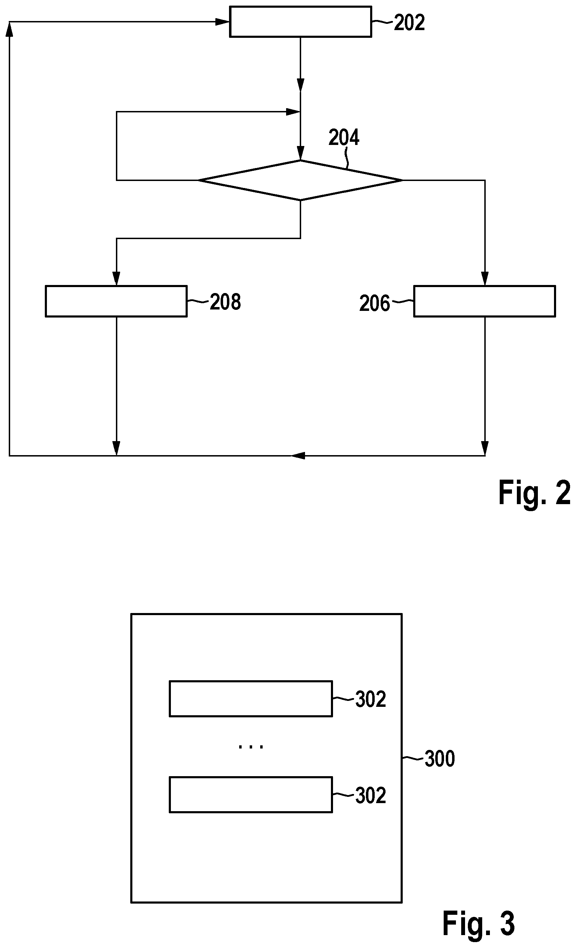

In Figur 2 ist ein Flussdiagramm mit Schritten eines Verfahrens zum Bereitstellen und/oder Speichern einer Änderungshistorie des ersten Wissensgraphen 102 dargestellt.

Das Verfahren umfasst einen Schritt 202.

Im Schritt 202 wird der zweite Wissensgraph 104 bereitgestellt.

Es kann vorgesehen sein, dass der erste Wissensgraph 102 und der zweite Wissensgraph 104 in einer erstmaligen Ausführung des Schritts 202 nach dem Beginn des Verfahrens, oder in einer Initialisierung gemeinsam bereitgestellt werden. Der zweite Wissensgraph 104 umfasst zumindest einen Teil des ersten Wissensgraphen 102.

Der zweite Wissensgraph 104 umfasst die Änderungshistorie.

Der erste Wissensgraph 102 umfasst z.B. Tripel, die die im ersten Wissensgraphen 102 gespeicherte Information darstellen. Der zweite Wissensgraph 104 wird z.B. mit RDF Tripel und RDF-star Tripel bereitgestellt, die die Änderungshistorie darstellen.

Es kann vorgesehen sein, dass eine SPARQL-star/Update query auf dem zweiten Wissensgraph 104 ausgeführt wird, die die Tripel aus dem ersten Wissensgraphen 102 einmalig mit derselben Information annotiert, z.B. mit einem Zeitstempel, d.h. Information über einen Zeitpunkt der Kopie, d.h. darüber, wann die Änderung im ersten Wissensgraphen 102 stattfand,
einem Verursacher, d.h. Information darüber, wer die Änderung der im ersten Wissensgraphen 102 gespeicherten Information verursacht hat,
einem Grund der Änderung, d.h. Information darüber, warum die Änderung der im ersten Wissensgraphen (102) gespeicherten Information veranlasst wurde.

Der Verursacher ist z.B. eine Person oder eine Applikation. Die Information über den Verursacher ist z.B. ein Name der Person oder der Applikation. Der Grund ist z.B. ein Ereignis, wie ein initiales Setup. Die Information über den Grund ist z.B. ein Name des Ereignis.

Bei der erstmaligen Ausführung des Schritts 202 oder der Initialisierung kann die Änderungshistorie leer sein.

Anschließend wird ein Schritt 204 ausgeführt.

Im Schritt 204 wird geprüft, ob eine Anfrage empfangen wurde oder nicht.

Wenn keine Anfrage empfangen wurde, wird der Schritt 204 ausgeführt.

Wenn eine Anfrage empfangen wurde, wird geprüft, ob die Anfrage eine Auskunft zu einer Änderung im ersten Wissensgraphen 102 betrifft, oder eine Änderung, die am ersten Wissensgraphen 102 vorgenommen werden soll.

Wenn die Anfrage eine Änderung betrifft, die am ersten Wissensgraphen 102 vorgenommen werden soll, wird ein Schritt 206 ausgeführt.

Wenn die Anfrage eine Auskunft zu einer Änderung im ersten Wissensgraphen 102 betrifft, wird ein Schritt 208 ausgeführt.

Im Schritt 206 wird die Änderung und die Änderungshistorie im zweiten Wissensgraphen 104 erzeugt. Die Änderung wird gemäß der Anfrage zur Änderung des ersten Wissensgraphen 102 vorgenommen. Das bedeutet, im zweiten Wissensgraphen 104 wird inkrementell eine Kopie der Änderungen am ersten Wissensgraphen 102 bereitgestellt.

Im Schritt 206 wird die Änderungshistorie bereitgestellt.

Im Schritt 206 wird beispielsweise eine Information über die Änderung die gemäß der Anfrage zur Änderung des ersten Wissensgraphen 102 im ersten Wissensgraphen 102 vorgenommen werden soll bzw. wurde, als Teil der Änderungshistorie im zweiten Wissensgraphen 104 gespeichert.

Beispielsweise wird für ein geändertes Tripel, das die Änderung im ersten Wissensgraphen 102 repräsentiert, wenigstens ein RDF-star Tripel bestimmt, das die Information über die Änderung repräsentiert.

Ein RDF-star Tripel wird erzeugt, das das geänderte Tripel im Subjekt enthält. Das RDF-star Tripel verknüpft das geänderte Tripel mit einer Instanz (Objekt des Tripels, Instanz der Klasse provs:TripleGenerationSet oder provs:TriplelnvalidationSet), das die Änderungen über weitere Tripel definiert.

Das RDF-star Tripel enthält das geänderte Tripel.

Beispielsweise werden RDF Tripel und RDF-star Tripel bestimmt, die eine Information über die am ersten Wissensgraphen 102 vorgenommene Änderung umfassen.

Beispielsweise wird ein RDF-star Tripel bestimmt, das das geänderte Tripel mit einer Instanz im Objekt verknüpft (Instanz der Klasse provs:TripleGenerationSet oder provs:TriplelnvalidationSet), für das über weitere RDF Tripel die Änderungshistorie definiert ist.

Beispielsweise werden für mehrere geänderte Tripel RDF Tripel und RDF-star Tripel bestimmt, die die Information über die Änderung umfassen.

Es kann vorgesehen sein, dass die Information über die Änderung zusammen mit der Anfrage im Schritt 204 empfangen wird. Beispielsweise umfasst die Anfrage zur Änderung des ersten Wissensgraphen 102 Information zur Änderung, die angibt, wie die im ersten Wissensgraphen 102 gespeicherte Information zu ändern ist, oder wer oder was die Änderung der im ersten Wissensgraphen 102 gespeicherten Information verursacht hat, oder wann oder wie die Änderung der im ersten Wissensgraphen 102 gespeicherten Information veranlasst wurde.

Es kann vorgesehen sein, dass die Information über die Änderung abhängig von der mit der Anfrage in Schritt 204 empfangenen Änderung bestimmt wird.

Beispielsweise wird beim Empfang einer Änderung, die ein Entfernen eines Tripels aus dem ersten Wissensgraphen 102 umfasst, eine Information über die Änderung bestimmt, die das Entfernen des Tripels vom ersten Wissensgraphen 102 repräsentiert.

Beispielsweise wird beim Empfang einer Änderung, die ein Hinzufügen eines Tripels zum ersten Wissensgraphen 102 umfasst, eine Information über die Änderung bestimmt, die das Hinzufügen des Tripels zum ersten Wissensgraphen 102 repräsentiert.

Die Änderung im ersten Wissensgraphen 102 kann ein Aktualisieren eines Tripels, insbesondere durch Ersetzen eines Tripels durch ein anderes Tripel, umfassen.

Beispielsweise wird beim Empfang einer Änderung, die ein Ersetzen eines Tripels aus dem ersten Wissensgraphen 102 durch ein anderes Tripel umfasst, eine Information über die Änderung bestimmt, die das Ersetzen, d.h. das Entfernen des einen Tripels aus dem ersten Wissensgraphen 102 und das Hinzufügen des anderen Tripels zum ersten Wissensgraphen 102 repräsentiert.

Es kann z.B. vorgesehen sein, dass als die Information über die Änderung eine Art der Änderung oder ein Zeitpunkt des Empfangs der Änderung, d.h. des Empfangs der Anfrage in Schritt 204, bestimmt wird. Die RDF Tripel und RDF-star Tripel geben z.B. an, wie, d.h. in welcher Art, sich die im ersten Wissensgraphen 102 gespeicherte Information im Laufe der Zeit geändert hat.

Das RDF-star Tripel verlinkt auf das Objekt, an dem dann die Änderungsinformationen als RDF Tripel hinterlegt sind.

Die Art der Änderung gibt z.B. an, dass ein Tripel hinzugefügt oder entfernt wird, oder dass ein Tripel durch ein anderes Tripel ersetzt wird.

Die RDF Tripel geben z.B. an, wer oder was eine Änderung der im ersten Wissensgraphen gespeicherten Information verursacht hat.

Die RDF Tripel geben z.B. an, wann, d.h. zu welchem Zeitpunkt, oder wie, d.h. z.B. durch den Client 106 oder den Server 108, eine Änderung der im ersten Wissensgraphen 102 gespeicherten Information veranlasst wurde.

Im Schritt 208 wird für die Anfrage zur Änderung im ersten Wissensgraphen 102 abhängig von der Anfrage mit dem zweiten Wissensgraphen 104 eine Antwort auf die Anfrage bestimmt.

Im Schritt 208 wird die Antwort gesendet.

Die Antwort umfasst beispielsweise Information zur Änderung oder Information zum Rückgängigmachen der Änderung.

Die Information zur Änderung gibt z.B. an, wie sich die im ersten Wissensgraphen 102 gespeicherte Information im Laufe der Zeit geändert hat.

Die Information zur Änderung gibt z.B. an, wer oder was eine Änderung der im ersten Wissensgraphen 102 gespeicherten Information verursacht hat.

Die Information zur Änderung gibt z.B. an, wann oder wie eine Änderung der im ersten Wissensgraphen 102 gespeicherten Information veranlasst wurde.

Beispielsweise werden für die Änderung im ersten Wissensgraphen 102 RDF Tripel und RDF-star Tripel bestimmt, die die Information über die Änderung repräsentieren.

Das bedeutet, es werden mehrere Tripel bestimmt, die zusammen die Änderung repräsentieren. Die RDF-star Tripel stellen den Link der geänderten Tripel auf die Änderung (Instanzen der Klasse provs:TripleGenerationSet oder provs:TriplelnvalidationSet) her. Die RDF Tripel repräsentieren die Änderung.

Das RDF-star Tripel wird z.B. dadurch gefunden, dass es das geänderte Tripel im Subjekt enthält.

Die RDF Tripel geben z.B. an, wie sich die im ersten Wissensgraphen 102 gespeicherte Information im Laufe der Zeit geändert hat.

Die RDF Tripel geben z.B. an, wer oder was eine Änderung der im ersten Wissensgraphen gespeicherten Information verursacht hat.

Die RDF Tripel geben z.B. an, wann oder wie eine Änderung der im ersten Wissensgraphen 102 gespeicherten Information veranlasst wurde.

Die Änderung im ersten Wissensgraphen 102 kann ein Entfernen oder ein Hinzufügen eines Tripels zum ersten Wissensgraphen 102 umfassen.

Die Änderung im ersten Wissensgraphen 102 kann ein Aktualisieren eines Tripels, insbesondere durch Ersetzen eines Tripels durch ein anderes Tripel, umfassen.

Die Änderungshistorie umfasst z.B. die Information, die angibt, wie sich die im ersten Wissensgraphen 102 gespeicherte Information im Laufe der Zeit geändert hat.

Die Änderungshistorie umfasst z.B. die Information, die angibt, wer oder was eine Änderung der im ersten Wissensgraphen 102 gespeicherten Information verursacht hat.

Die Änderungshistorie umfasst z.B. die Information, die angibt, wann oder wie eine Änderung der im ersten Wissensgraphen gespeicherten Information veranlasst wurde.

Figur 3 stellt eine insbesondere computerimplementierte Datenstruktur 300, zum Bereitstellen und/oder Speichern einer Änderungshistorie des ersten Wissensgraphen 102 schematisch dar.

Die Datenstruktur 300 umfasst wenigstens ein Datenfeld 302 für den zweiten Wissensgraphen 104.

Im Beispiel umfasst die Datenstruktur Datenfelder 302 für die Tripel des zweiten Wissensgraphen 104.

Das bedeutet, die Datenstruktur 300 umfasst Datenfelder 302 für die im zweiten Wissensgraphen 104 gespeicherten Tripel des ersten Wissensgraphen 102 und zusätzlich die Änderungshistorie, d.h. Tripel, die die Information über die Änderungen repräsentieren. Die Datenstruktur 300 umfasst Datenfelder 302 für RDF-star Tripel, die die geänderten Tripel im Subjekt enthalten, und auf ein Objekt verlinken. Die Datenstruktur 300 umfasst z.B. Datenfelder 302 für wenigstens ein Tripel der Änderungshistorie, das ein Tripel des ersten Wissensgraphen 102 als Subjekt umfasst. Das wenigstens eine Tripel umfasst ein Prädikat und ein Objekt der Änderungshistorie. Das Prädikat und das Objekt des wenigstens einen Tripels der Änderungshistorie verknüpfen das Tripel des ersten Wissensgraphen 102 mit einem Teilgraphen des zweiten Wissensgraphen 104. Der Teilgraph umfasst die Information über die am ersten Wissensgraphen 102 vorgenommene Änderung. Der Teilgraph ist im Beispiel ein RDF Graph. Der RDF Graph umfasst die zuvor beschriebenen RDF-Tripel und die RDF-star Tripel.

Die Datenfelder 302 sind beispielsweise dahingehend verschieden, dass Datenfelder 302 für Tripel des ersten Wissensgraphen 102 und Datenfelder 302 für die Änderungshistorie, d.h. für RDF-star Tripel, die auf die Information über die Änderungen verlinken, im jeweiligen Datenfeld 302 selbst oder in der Datenstruktur 300 unterschiedlich gekennzeichnet sind.

Das bedeutet, die Datenstruktur 300 umfasst Datenfelder 302 für die Änderungshistorie.

Die Änderungshistorie umfasst wenigstens ein Tripel, das ein Tripel des ersten Wissensgraphen 102 als Subjekt umfasst. Das wenigstens eine Tripel umfasst ein Prädikat und ein Objekt. Das Prädikat und das Objekt des wenigstens einen Tripels der Änderungshistorie verknüpfen das Tripel des ersten Wissensgraphen 102 mit einem Teilgraphen des zweiten Wissensgraphen 104. Der Teilgraph umfasst die Information über die am ersten Wissensgraphen 102 vorgenommene Änderung. Der Teilgraph ist im Beispiel ein RDF Graph. Der RDF Graph umfasst die zuvor beschriebenen RDF-Tripel und die RDF-star Tripel.

## Patentansprüche

1. Vorrichtung (120) zum Bereitstellen und/oder Speichern einer Änderungshistorie eines ersten Wissensgraphen (102), **dadurch gekennzeichnet, dass** die Vorrichtung (120) wenigstens einen insbesondere nicht-flüchtigen Speicher (112) umfasst, wobei auf dem wenigstens einen Speicher (112) ein zweiter Wissensgraph (104) gespeichert ist, wobei der zweite Wissensgraph (104) zumindest einen Teil des ersten Wissensgraphen (102) umfasst, wobei der zweite Wissensgraph (104) die Änderungshistorie umfasst, wobei die Änderungshistorie wenigstens ein Tripel umfasst, das ein Tripel des ersten Wissensgraphen (102) als Subjekt umfasst, wobei das wenigstens eine Tripel ein Prädikat und ein Objekt umfasst, wobei das Prädikat und das Objekt das Tripel des ersten Wissensgraphen (102) mit einem Teilgraphen des zweiten Wissensgraphen (104), insbesondere einem RDF Graphen im zweiten Wissensgraphen, verknüpft, der eine Information über die am ersten Wissensgraphen (102) vorgenommene Änderung umfasst.

2. Vorrichtung (120) nach Anspruch 1, **dadurch gekennzeichnet, dass** die Information angibt, wie sich die im ersten Wissensgraphen (102) gespeicherte Information im Laufe der Zeit geändert hat, oder wer oder was die Änderung der im ersten Wissensgraphen (102) gespeicherten Information verursacht hat, oder wann oder wie die Änderung der im ersten Wissensgraphen (102) gespeicherten Information veranlasst wurde.

3. Vorrichtung (120) nach Anspruch 1 oder 2, **dadurch gekennzeichnet, dass** der erste Wissensgraph (102) Information aus der Domäne Physik, Chemie, Medizin, Biologie, insbesondere über ein technisches System, vorzugsweise eine Fabrik oder ein Gebäude oder ein Fahrzeug oder einen Sensor oder ein digitales Bildgebungssystem oder ein Rechnernetzwerk oder ein Heiz- und/oder Kühlsystem umfasst, insbesondere Information über einen digitalen Zwilling einer Fabrik oder eines Gebäudes oder eines Fahrzeugs oder eines Sensors oder eines digitalen Bildgebungssystems oder eines Rechnernetzwerks oder eines Heiz- und/oder Kühlsystems darstellen.

4. Vorrichtung (120) nach einem der vorherigen Ansprüche, **dadurch gekennzeichnet, dass** mehrere von der Änderung betroffene Tripel des ersten Wissensgraphen (102) in das Subjekt je eines Tripels der Änderungshistorie aufgenommen werden, wobei die jeweiligen Tripel der Änderungshistorie dasselbe Objekt und Prädikat aufweisen.

5. Vorrichtung (120) nach einem der vorherigen Ansprüche, **dadurch gekennzeichnet, dass** die Vorrichtung (120) eine Recheneinrichtung (110) umfasst, wobei die Recheneinrichtung (110) ausgebildet ist, die Änderung zu empfangen und im zweiten Wissensgraphen (104) zu speichern, und wobei die Vorrichtung (120) ausgebildet ist, die Information zu empfangen oder abhängig von der empfangenen Änderung oder einer Art der Änderung oder einem Zeitpunkt des Empfangs der Änderung zu bestimmen, und als Teil der Änderungshistorie im zweiten Wissensgraphen (104) zu speichern

6. Vorrichtung (120) nach einem der vorherigen Ansprüche, **dadurch gekennzeichnet, dass** die Recheneinrichtung (110) ausgebildet ist, eine Anfrage, insbesondere eine SPARQL-star query, zu einer Änderung zu empfangen, wobei die Vorrichtung (120) ausgebildet ist, abhängig von der Anfrage mit dem zweiten Wissensgraphen (104) eine Antwort auf die Anfrage zu bestimmen, wobei die Recheneinrichtung (110) dazu ausgebildet ist, die Antwort zu senden, wobei die Antwort Information zur Änderung oder Information zum Rückgängigmachen der Änderung umfasst, wobei die Information zur Änderung angibt, wie sich die im ersten Wissensgraphen (102) gespeicherte Information im Laufe der Zeit geändert hat, oder wer oder was die Änderung der im ersten Wissensgraphen (102) gespeicherten Information verursacht hat, oder wann oder wie die Änderung der im ersten Wissensgraphen (102) gespeicherten Information veranlasst wurde.

7. Vorrichtung (120) nach einem der vorherigen Ansprüche, **dadurch gekennzeichnet, dass** die Änderung im ersten Wissensgraphen (102) ein Entfernen des Tripels aus dem ersten Wissensgraph oder ein Hinzufügen des Tripels zum ersten Wissensgraphen (102) umfasst, oder dass die Änderung im ersten Wissensgraphen (102) ein Aktualisieren des Tripels im ersten Wissensgraphen (102), insbesondere durch Ersetzen des Tripels durch ein anderes Tripel, umfasst.

8. Verfahren zum Bereitstellen und/oder Speichern einer Änderungshistorie eines ersten Wissensgraphen (102), **dadurch gekennzeichnet, dass** ein zweiter Wissensgraph (104) bereitgestellt wird (202), wobei der zweite Wissensgraph (104) zumindest einen Teil des ersten Wissensgraphen (102) umfasst, wobei der zweite Wissensgraph (104) die Änderungshistorie umfasst, wobei die Änderungshistorie wenigstens ein Tripel umfasst, das ein Tripel des ersten Wissensgraphen (102) als Subjekt umfasst, wobei das wenigstens eine Tripel ein Prädikat und ein Objekt umfasst, wobei das Prädikat und das Objekt das Tripel des ersten Wissensgraphen (102) mit einem Teilgraphen des zweiten Wissensgraphen (104), insbesondere einem RDF Graphen im zweiten Wissensgraphen, verknüpft, der eine Information über die am ersten Wissensgraphen (102) vorgenommene Änderung umfasst.

9. Verfahren nach Anspruch 8, **dadurch gekennzeichnet, dass** die Änderungshistorie bereitgestellt wird (206), wobei die Information angibt, wie sich die im ersten Wissensgraphen (102) gespeicherte Information im Laufe der Zeit geändert hat, oder wobei die Information angibt wer oder was die Änderung der im ersten Wissensgraphen (102) gespeicherten Information verursacht hat, oder wann oder wie die Änderung der im ersten Wissensgraphen (102) gespeicherten Information veranlasst wurde.

10. Verfahren nach Anspruch 8 oder 9, **dadurch gekennzeichnet, dass** der erste Wissensgraph (102) Information aus der Domäne Physik, Chemie, Medizin, Biologie, insbesondere über ein technisches System, vorzugsweise eine Fabrik oder ein Gebäude oder ein Fahrzeug oder einen Sensor oder ein digitales Bildgebungssystem oder ein Rechnernetzwerk oder ein Heiz- und/oder Kühlsystem umfasst, insbesondere Information über einen digitalen Zwilling einer Fabrik oder eines Gebäudes oder eines Fahrzeugs oder eines Sensors oder eines digitalen Bildgebungssystems oder eines Rechnernetzwerks oder eines Heiz- und/oder Kühlsystems darstellen.

11. Verfahren nach einem der Ansprüche 8 bis 10, **dadurch gekennzeichnet, dass** mehrere durch die Änderung geänderte Tripel in das Subjekt je eines Tripels der Änderungshistorie aufgenommen werden, wobei die jeweiligen Tripel der Änderungshistorie dasselbe Objekt und Prädikat umfassen .

12. Verfahren nach einem der Ansprüche 8 bis 11, **dadurch gekennzeichnet, dass** die Änderung im ersten Wissensgraphen (102) empfangen (204) und im zweiten Wissensgraphen (104) gespeichert wird (206), und wobei die Information über die Änderung im zweiten Wissensgraphen (104) empfangen (204) oder abhängig von der empfangenen Änderung oder einer Art der Änderung oder einem Zeitpunkt des Empfangs der Änderung bestimmt, und als Teil der Änderungshistorie im zweiten Wissensgraphen (104) gespeichert wird (206), und/oder dass eine Anfrage zu einer Änderung im ersten Wissensgraphen (102) empfangen (204), abhängig von der Anfrage mit dem zweiten Wissensgraphen (104) eine Antwort auf die Anfrage bestimmt, und die Antwort gesendet wird (208), wobei die Antwort Information zur Änderung oder Information zum Rückgängigmachen der Änderung umfasst, wobei die Information zur Änderung angibt, wie sich die im ersten Wissensgraphen (102) gespeicherte Information im Laufe der Zeit geändert hat, oder wer oder was die Änderung der im ersten Wissensgraphen (102) gespeicherten Information verursacht hat, oder wann oder wie die Änderung der im ersten Wissensgraphen (102) gespeicherten Information veranlasst wurde.

13. Verfahren nach einem der Ansprüche 8 bis 12, **dadurch gekennzeichnet, dass** die Änderung im ersten Wissensgraphen (102) ein Entfernen des Tripels aus dem ersten Wissensgraphen (102) oder ein Hinzufügen des Tripels zum ersten Wissensgraphen (102) umfasst, oder dass die Änderung im ersten Wissensgraphen (102) ein Aktualisieren des Tripels im ersten Wissensgraphen (102), insbesondere durch Ersetzen des Tripels im ersten Wissensgraphen (102) durch ein anderes Tripel umfasst.

14. Datenstruktur (300), insbesondere computerimplementierte Datenstruktur, zum Bereitstellen und/oder Speichern einer Änderungshistorie eines ersten Wissensgraphen (102) **dadurch gekennzeichnet, dass** die Datenstruktur (300) wenigstens ein Datenfeld (302) für einen zweiten Wissensgraphen (104), insbesondere für Tripel des zweiten Wissensgraphen (104), umfasst, wobei der zweite Wissensgraph (104) zumindest einen Teil des ersten Wissensgraphen (102) umfasst, wobei der zweite Wissensgraph (104) die Änderungshistorie umfasst, wobei die Änderungshistorie wenigstens ein Tripel umfasst, das ein Tripel des ersten Wissensgraphen (102) als Subjekt umfasst, wobei das wenigstens eine Tripel ein Prädikat und ein Objekt umfasst, wobei das Prädikat und das Objekt das Tripel des ersten Wissensgraphen (102) mit einem Teilgraphen des zweiten Wissensgraphen (104), insbesondere einem RDF Graphen im zweiten Wissensgraphen, verknüpft, der eine Information über die am ersten Wissensgraphen (102) vorgenommene Änderung umfasst.
